(19) **Europäisches Patentamt**

**European Patent Office**

**Office européen des brevets**

(11) Publication number: **0 228 166**
**B1**

(12) **EUROPEAN PATENT SPECIFICATION**

(45) Date of publication of the patent specification:
**16.08.90**

(21) Application number: **86308702.9**

(22) Date of filing: **07.11.86**

(51) Int. Cl.⁵: **C04B 41/85, C04B 35/54,**
**C23C 4/04, B32B 18/00**

(54) Method of making graphite forming dies.

(30) Priority: **24.12.85 US 813172**

(43) Date of publication of application:
**08.07.87 Bulletin 87/28**

(45) Publication of the grant of the patent:
**16.08.90 Bulletin 90/33**

(84) Designated Contracting States:
**DE FR GB**

(56) References cited:
**WO-A-84/00924**
**DE-A- 3 446 286**
**JP-A-56 017 914**
**JP-A-57 100 987**
**JP-A-59 023 865**
**US-A- 3 987 658**

(73) Proprietor: **FORD MOTOR COMPANY LIMITED, Eagle Way, Brentwood Essex CM13 3BW(GB)**
(84) Designated Contracting States: **GB**

(73) Proprietor: **FORD-WERKE AKTIENGESELLSCHAFT, Werk Köln-Niehl Henry-Ford-Strasse Postfach 60 40 02, D-5000 Köln 60(DE)**
(84) Designated Contracting States: **DE**

(73) Proprietor: **FORD FRANCE SOCIETE ANONYME, 344 Avenue Napoléon Bonaparte B.P. 307, F-92506 Rueil Malmaison Cedex(FR)**
(84) Designated Contracting States: **FR**

(72) Inventor: **Anderson, Anthony Theria, 5814 Second Street, Romulus Michigan(US)**

(74) Representative: **Messulam, Alec Moses et al, A. Messulam & Co. 24 Broadway, Leigh on Sea Essex SS9 1BN(GB)**

ACTORUM AG

## Description

This invention relates to a method of making graphite dies for forming sheet metal, and particularly to the art of chemically bonding a coating to such graphite dies to increase wear resistance.

In the past, refractory alloys or super alloys have been utilized as die materials for forging metals, e.g., molybdenum alloys or nickel base alloys. These alloys are capable of withstanding high compressive forces at elevated temperatures and possess sufficient thermal conductivity to insure uniform temperature distribution throughout the die. Unfortunately, the materials are extremely expensive and difficult to machine.

Inexpensive zinc alloy dies have been utilized heretofore, but have lacked adequate die life according to the needs of this invention. Moreover, the conventional use of wear resistant steel alloy dies has proved to be highly expensive.

A nonmetallic die material which has been found useful in both room temperature and high temperature forming is graphite. Graphite is known to be low in cost, easily machined, and exhibits excellent thermal conductivity. Graphite dies have been utilised heretofore in forming sheet metal at room temperatures and at low strain rates on high strength alloys at temperatures within 170°C (350°F) of the alloys' normal recrystallization temperature (see U.S. Patent 3 987 658). Graphite has a compressive strength of at least $6.894 \times 10^4$kPa (10,000 psi) at room temperature and sufficient compressive strength for forging high strength alloys at room temperature with advanced techniques. Such graphite materials have been utilized in the uncoated condition and increased die life has been achieved through modification of the graphite material itself (again see U.S. Patent 3 987 658). However, to achieve a desirable degree of wear resistance at either room temperature or elevated temperatures, a coating is needed.

What is needed is a graphite die construction which has highly increased wear resistance while still offering a material which is low in cost, easily machinable, and has excellent thermal conductivity.

It is an object of this invention to provide an improved chemically coated graphite forming die and method of making, which graphite die is not only easily machinable prior to coating, but is low in cost and has highly increased wear resistance both at room temperature and elevated temperatures.

According to the invention there is provided a method of making graphite based forming dies, comprising (a) machining a graphite based substrate to a shaped form with surfaces defining a desired profile, and (b) chemically reacting molten silicon or silicon based alloy with at least certain surfaces of the shaped form while under a vacuum or inert atmosphere for a period of time and at a temperature to form a protective chemically bonded coating on said certain surfaces consisting predominantly of beta silicon carbide and having silicon present in an amount of 5–20% by weight.

The graphite dies may be coated with a composite of alpha or beta silicon carbide and silicon, the former being highly wear resistant and providing a secure adherence and physical matchup with the graphite substrate.

### Graphite Substrate

A substantially pure graphite substrate may be formed by casting or injection molding a hydrocarbon followed by thermal decomposition of the hydrocarbon (see U.S. Patent 3 859 421) or by electrodeposition of graphite. The resulting graphite will vary in porosity depending on the method used. Hydrocarbon derived graphite will usually have higher porosity (about 10%) and is preferred for use in this invention. Electrodeposited graphite is higher in density having almost no porosity (0%). Cast graphite will have a compressive strength at room temperature of about 8000 psi and electrodeposited graphite will have a compressive strength of about $11 \times 10^4$kPa (16,000 psi). A compressive strength of at least $5.5 \times 10^4$kPa (8000 psi) is useful for this invention. The substrate may also be a graphite composite with glass (or equivalent) fiber reinforcement being introduced during the casting or electrodeposition.

The graphite substrate can be machined by use of conventional tool steels and shaped in a precision manner. Composite graphite is also machined by conventional means. Graphite based substrate is used herein to mean cast, electrodeposited or composite graphite in which graphite constitutes at least 70% by volume of the substrate.

### Silicon Coating

Chemical wetting of the shaped surfaces is preferably carried out by selectively or totally immersing such surfaces in molten silicon or a silicon based alloy. The wetting of such surfaces may also be carried out by spraying or streaming molten silicon or silicon alloy thereon. Wetting of such surfaces should take place under a vacuum having a pressure of about $10^{-3}$ torr or an inert atmosphere having a pressure between about .1 and 20 torr; the inert atmosphere is preferably nitrogen but may be other inert gases or mixtures thereof. Wetting is essentially a wicking of the molten silicon into the porosity of the graphite or, if no porosity, then a surface attraction between the graphite and silicon which permits chemical diffusion.

The reaction temperature for said molten silicon or silicon based alloy should be in the range of 1450–1600°C and should be allowed to contact said shaped form surfaces for a period of about 5–10 minutes.

If the contact time is less than five minutes, the coating will usually be too thin with little building of silicon thickness. If the contact time is in excess of about 10 minutes, the character of the coating will begin to consist substantially all of beta silicon carbide formed first at the interface with the graphite. Beta silicon carbide is a cubic crystal phase that forms at higher temperatures such as 1425°C, which will be experienced in cooling of molten silicon. The ratio of silicon to beta silicon carbide is in the range of 20/80 to 5/95. In this manner, the beta silicon carbide is thin enough to serve as a flexible film that more readily matches the modulus of elasticity of the graphite based substrate. If the beta silicon carbide were to exceed the desired film thickness, it would be more susceptible to cracking as a brittle, thicker material. The beta silicon carbide provides a tight bond to silicon because of their low interfacial energy.

The silicon alloy, when employed, will vary depending on the alloy ingredient present. For example, with boron, between 1–10 atomic percent is acceptable; with copper or nickel, 2–3 weight percent is acceptable. Impurities in silicon or silicon alloy should be no greater than .2%.

The thickness of the coating can be controlled by monitoring the reaction temperature and time. Preferably, the ideal coating thickness for drawing and press bending of low carbon steel sheet metal at room temperature should be in the range of .127–1.27 mm for most automotive applications. However, the thickness range can be expanded at the low end to .03 mm when such flex forming applications are considered. Similarly, the thickness can be increased beyond 1.27 mm when considering deep draw applications.

Greater wetting of graphite by the silicon is achieved if the temperature is not below 1450°C. This results in good penetration of the molten silicon or silicon based alloy be capillary attraction into the porous graphite substrate before reacting with the graphite. However, if the temperature is greater than 1600°C, too extensive of beta silicon carbide is encouraged.

Resulting Product

The product resulting from the practice of the above method is characterized by a coating having about 80% beta silicon carbide and about 20% unreacted silicon or silicon alloy. The coating adheres to the graphite based substrate by virtue of the thin flexible layer of beta silicon carbide. The bond has a strength sufficient to endure most sheet metal forming operations and the bond layer has compressive strength of at least $17.2 \times 10^4$ kPa (25,000 psi). The coated die has a wear resistance at room temperature of $10^{13}$ g-cm/cm$^3$ and a wear resistance of $10^{11}$ g-cm/cm$^3$ at an elevated temperature of 1000°C.

Examples

Samples of graphite dies coated with silicon carbide and silicon were prepared; the processing or coating material was varied to demonstrate the criticality thereof and as shown in Table I. Each of the samples consisted of a cast graphite substrate having about 9% porosity. The shaped surfaces of each sample were subjected to immersion in a silicon or silicon alloy material while under a vacuum of about $10^{-3}$ torr. Each sample was removed from the immersion material and tested as to the coating character, thickness, brittleness, and wettability. Samples 1, 4 and 7 were within the parameters of this invention and demonstrated an excellent ration of SiC/Si, good wettability, proper thickness and no brittleness. Samples 2, 3, 5, 6 and 8 were outside the parameters preferred and showed one or more deficiences.

TABLE I

| Sample | Coating Material | Temp. Reaction (°C) | Time For Reaction (Minutes) | SiC/Si Ratio | Wetting Characteristics | Coating Thickness / Brittleness |
|---|---|---|---|---|---|---|
| 1 | Si | 1500 | 10 | 80/20 | Good | .875 mm / Not Brittle |
| 2 | " | 1200 | " | No Coating | None (below melt point of Si) | -- |
| 3 | " | 1700 | " | 98/2 | Excellent | 1.05 / Brittle |
| 4 | Si/B (8% B) | 1500 | " | 80/20 | " | 1.08 / Not Brittle |
| 5 | Si | " | 2 | 60/40 | OK Wetting | .129 / Not Brittle |
| 6 | Si/B (15% B) | " | 10 | 70/30 | Decreased Wettability | .102 / Not Brittle |
| 7 | Si/Cu (2% Cu) | " | " | 80/20 | Good | .902 / Not Brittle |
| 8 | Si/Cu (6% Cu) | " | " | 72/28 | Decreased Wettability | .108 / Not Brittle |

EP 0 228 166 B1

## Claims

1. A method of making graphite based forming dies, comprising (a) machining a graphite based substrate to a shaped form with surfaces defining a desired profile, and (b) chemically reacting molten silicon or silicon based alloy with at least certain surfaces of the shaped form while under a vacuum or inert atmosphere for a period of time and at a temperature to form a protective chemically bonded coating on said certain surfaces consisting predominantly of beta silicon carbide and having silicon present in an amount of 5-20% by weight.

2. A method as claimed in Claim 1, in which said graphite based substrate is formed by electro deposition or molding.

3. A method as claimed in Claim 1 or 2, in which said silicon based alloy contains at least one of 1-10 atomic percent boron, 2-3 weight percent copper, or 2-3 weight percent nickel.

4. A method as claimed in any one of Claims 1 to 3, in which the chemical reaction is carried out at a temperature of 1450-1600°C for 5-10 minutes.

5. A method as claimed in any one of the preceding claims, in which said substrate has a strength of at least $5.5 \times 10^4$ kPa (8000 psi) and a porosity in the range of 5-10 per cent.

6. A method as claimed in any one of the preceding claims, in which said substrate is heated to a temperature of 1200°C just prior to step (b).

7. A method as claimed in any one of the preceding claims, in which the thickness of said coating is in the range of .127-1.27 mm.

8. A method as claimed in any one of the preceding claims, in which the inert atmosphere when employed is comprised of nitrogen.

9. A graphite die made by the method claimed in Claim 1, in which said beta silicon carbide is present as a thin flexible interface layer between said silicon and substrate.

## Patentansprüche

1. Verfahren zur Herstellung Umformgesenken auf Graphitbasis, dadurch gekennzeichnet, daß man (a) einen Träger auf Graphitbasis zu einer Form mit ein gewünschtes Profil bestimmenden Oberflächen verarbeitet, und (b) eine Siliciumschmelze oder Legierungsschmelze auf Siliciumbasis chemisch mit mindestens gewissen Oberflächen der Form in einem Vakuum oder einer Schutzgasatmosphäre eine gewisse Zeit und bei solch einer Temperatur umsetzt, daß auf jenen bestimmten Oberflächen eine chemisch gebundene Schutzschicht entsteht, die vorwiegend aus Beta-Siliciumcarbid besteht und einen Siliciumanteil von 5–20 Gew.-% aufweist.

2. Verfahren nach Anspruch 1, dadurch gekennzeichnet, daß jener Träger auf Graphitbasis durch galvanische Abscheidung oder Spritzgießen hergestellt wird.

3. Verfahren nach Anspruch 1 oder 2, dadurch gekennzeichnet, daß jene Legierung auf Siliciumbasis mindestens entweder 1–10 Gew.-% Bor, 2–3 Gew.-% Kupfer oder 2–3 Gew.-% Nickel enthält.

4. Verfahren nach einem der Ansprüche 1 bis 3, dadurch gekennzeichnet, daß die chemische Reaktion 5–10 Minuten bei einer Temperatur von 1450–1600°C erfolgt.

5. Verfahren nach einem der vorhergehenden Ansprüche, dadurch gekennzeichnet, daß jener Träger eine Festigkeit von mindestens $5,5 \times 10^4$ kPa (8000 psi) und eine Porosität im Bereich 5–10% aufweist.

6. Verfahren nach einem der vorhergehenden Ansprüche, dadurch gekennzeichnet, daß jener Träger unmittelbar vor dem Schritt (b) auf eine Temperatur von 1200°C erhitzt wird.

7. Verfahren nach einem der vorhergehenden Ansprüche, dadurch gekennzeichnet, daß die Dicke jener Beschichtung in dem Bereich 0,127–1,27 mm liegt.

8. Verfahren nach einem der vorhergehenden Ansprüche, dadurch gekennzeichnet, daß die gegebenenfalls verwendete Schutzgasatmosphäre aus Stickstoff besteht.

9. Ein nach dem Verfahren nach Anspruch 1 hergestelltes Graphitgesenk, dadurch gekennzeichnet, daß jenes Beta-Siliciumcarbid als eine dünne, flexible Grenzschicht zwischen jenem Träger vorhanden ist.

## Revendications

1. Procédé de fabrication de matrices de formage à base de graphite, consistant à (a) usiner un substrat à base de graphite jusqu'à une forme profilée, avec des surfaces délimitant un profil souhaité, et (b) faire réagir chimiquement du silicium fondu ou un alliage à base de silicium avec au moins certianes surfaces de la forme profilée, sous vide ou dans une atmosphère inerte, pendant une durée et à une température propres à former, sur lesdites surfaces, un revêtement protecteur fixé chimiquement, consistant au premier chef en du carbure de silicium béta, et renfermant du silicium en une quantité de 5–20% en poids.

2. Procédé selon la revendication 1, dans lequel ledit substrat à base de graphite est formé par dépôt électrolytique ou par moulage.

3. Procédé selon la revendication 1 ou 2, dans lequel ledit alliage à base de silicium renferme au moins l'une des substances que sont le bore, en un pourcentage atomique de 1–10, le cuivre, en un pourcentage pondéral de 2–3, ou le nickel, en un pourcentage pondéral de 2–3.

4. Procédé selon l'une quelconque des revendications 1 à 3, dans lequel la réaction chimique est conduite à une température de 1450–1600°C, pendant 5–10 minutes.

5. Procédé selon l'une quelconque des revendications précédentes, dans lequel ledit substrat présente une résistance d'au moins $5,5 \times 10^4$ kPa (8000 psi), et une porosité située dans la plage de 5–10 pour cent.

6. Procédé selon l'une quelconque des revendications précédentes, dans lequel ledit substrat est chauffé jusqu'à une température de 1200°C, juste avant l'étape (b).

7. Procédé selon l'une quelconque des revendications précédentes, dans lequel l'épaisseur dudit revêtement se situe dans la plage de 0,127–1,27 mm.

8. Procédé selon l'une quelconque des revendications précédentes, dans lequel l'atmosphère inerte, lorsqu'elle est utilisée, consiste en de l'azote.

9. Matrice au graphite fabriquée par le procédé selon la revendications 1, dans laquelle ledit carbure de silicium béta est présent, entre ledit silicium et ledit substrat, sous la forme d'une mince couche interfaciale flexible.